# FASCICULE DE BREVET EUROPEEN

(11) **EP 3 353 836 B1**
(45) Date de publication et mention de la délivrance du brevet: **21.04.2021**
(21) Numéro de dépôt: 16777723.4
(22) Date de dépôt: 14.09.2016
(51) Int. Cl.: H01M 4/86, H01M 4/88, H01M 4/90, H01M 8/16, C25B 1/02, C25B 11/04

(54) **BLOC DE REACTEUR ELECTROCHIMIQUE**
ELEKTROCHEMISCHER REAKTORBLOCK
ELECTROCHEMICAL REACTOR BLOCK

(30) Priorité: 25.09.2015 FR 1559069
(43) Date de publication de la demande: 01.08.2018
(73) Titulaire: Université Grenoble Alpes, 38401 Saint-Martin-d'Hères (FR)
(72) Inventeur: COSNIER, Serge, 38041 Grenoble Cedex 9 (FR); HADDAD, Raoudha, 38041 Grenoble Cedex 9 (FR)
(74) Mandataire: LLR
(86) Numéro de dépôt international: PCT/FR2016/052310
(87) Numéro de publication internationale: WO 2017/051095

(56) Documents cités:
- EP-A1- 2 375 481
- WO-A1-2012/022363
- WO-A1-2012/022921
- HUSSEIN L ET AL: "Decorated nanotube buckypaper as electrocatalyst for glucose fuel cells", PROCEEDINGS IEEE TRANSDUCERS CONFERENCE 2009, DENVER, CO, USA, 21 juin 2009 (2009-06-21), pages 2254-2257, XP002634208, ISBN: 1-4244-4193-8

## Description

### Domaine

La présente invention concerne un procédé de fabrication d'un bloc d'un réacteur électrochimique au niveau duquel est susceptible de se produire une réaction entre des agents catalyseurs confinés dans ce réacteur et des composés présents dans un milieu liquide dans lequel baigne le réacteur. Cette réaction peut par exemple conduire à une déformation du réacteur, à la génération d'un potentiel électrique, ou à la transformation chimique du composé interagissant avec le réacteur. Ce réacteur peut être un bioréacteur.

Un bioréacteur conduisant à la génération d'un potentiel électrique peut constituer une bioélectrode d'une biopile ou d'un biocapteur, de type à sucre-oxygène, par exemple à glucose-oxygène.

Un bioréacteur conduisant à la transformation chimique d'un composé interagissant avec le bioréacteur constitue par exemple un destructeur de glucose (glucose killer) en transformant par exemple du glucose en un composé qui sera par exemple éliminé par l'organisme dans lequel le bioréacteur est implanté.

Bien que l'invention et l'état de la technique soient décrits ici principalement dans le cas de bioélectrodes on comprendra que l'invention s'applique à tout réacteur électrochimique, et pas seulement à un bioréacteur implantable in vivo.

### Exposé de l'art antérieur

Divers types de bioélectrodes solides sont décrits dans l'art antérieur. Par exemple, le brevet français déposé sous le numéro N°10/52657 (B10272) décrit une pastille d'électrode obtenue par compression d'un matériau électriquement conducteur tel que du graphite, une enzyme, un médiateur rédox et éventuellement un polymère électriquement conducteur. La pastille a la forme d'un disque dont l'épaisseur est supérieure à 0,5 mm et dont le diamètre est supérieur à 0,5 cm. Bien qu'une telle pastille puisse être utilisée comme bioélectrode, sa rigidité et son encombrement limitent son utilisation notamment dans des parties du corps présentant des volumes réduits, par exemple dans un vaisseau sanguin.

La demande de brevet français déposée sous le numéro 10/56672 (B10419) décrit une pastille d'électrode obtenue par compression d'un mélange en solution comprenant des nanotubes de carbone et une enzyme.

L'article "Plasma functionalization of bucky paper and its composite with phenylethynyl-terminated polyimide" de Qian Jiang et. al. paru en Février 2013 dans le volume 45 de la revue "Composites Part B: Engineering", décrit la fabrication d'un film conducteur composite de nanotubes de carbone et d'un polyimide.

Le brevet WO2012022921 décrit une procédé de fabrication d'un bloc de réacteur électrochimique par un mélange de nanotubes de carbone et d'une enzyme et par obtention d'électrodes sous forme de disque par compression. Ces divers réacteurs présentent des inconvénients et notamment une durée de vie limitée.

Il est souhaitable de prévoir un réacteur électrochimique palliant au moins certains de ces inconvénients.

### Résumé

Ainsi, l'invention selon la revendication 1, prévoit un procédé de fabrication d'un bloc de réacteur électrochimique comprenant les étapes suivantes :
réaliser un film conducteur souple comprenant des chaines d'un polymère linéaire à chacune desquelles sont liés par interaction pi-pi des nanotubes de carbone ;
découper des pastilles dans ledit film ; et
empiler les pastilles et les soumettre à une pression de l'ordre de 5 à 10 tonnes par centimètre carré en présence d'eau et d'un agent catalyseur.

Selon un mode de réalisation, l'étape de réalisation d'un film conducteur souple comprend les étapes suivantes :
préparer une suspension comprenant des nanotubes de carbone et des chaines d'un polymère linéaire, chacune desdites chaines portant une succession de groupements fonctionnels dont certains au moins comportent des groupements pi conjugués ; et
filtrer sous vide la suspension pour obtenir un film desdites chaines auxquelles sont liés les nanotubes de carbone par interaction pi-pi.

Selon un mode de réalisation, l'agent catalyseur est choisi dans le groupe comprenant des enzymes, des catalyseurs métalliques, des catalyseurs macrocycliques et des médiateurs rédox.

Selon un mode de réalisation, le polymère linéaire est choisi dans le groupe comprenant les polynorbornènes, le polyvinylpyrrolidone et le polystyrène sulfonate de sodium.

Selon un mode de réalisation, chacun desdits groupements fonctionnels comportant un groupement pi conjugué est choisi dans le groupe comprenant les porphyrines, la phthalocyanine, le pyrène, le benzène, l'indole, l'azulène, les phénothiazines et le naphtalène.

Selon un mode de réalisation, une distance inférieure à la longueur des nanotubes sépare deux groupements pi conjugués successifs d'une même chaîne de polymère linéaire.

Selon un mode de réalisation, la longueur de chacune desdites chaînes de polymère est supérieure à 0,1 µm.

L'invention selon la revendication 8, prévoit un bloc de réacteur électrochimique comprenant au moins deux pastilles découpées dans un film conducteur souple comportant des chaines d'un polymère linéaire à chacune desquelles sont liés par interaction pi-pi des nanotubes de carbone, un agent catalyseur choisi dans le groupe comprenant des enzymes, des catalyseurs métalliques, des catalyseurs macrocycliques et des médiateurs rédox étant piégé entre les pastilles.

Selon un mode de réalisation, le bloc de réacteur électrochimique constitue la cathode d'une biopile destinée à être immergée dans un milieu liquide contenant un sucre et de l'oxygène, et l'agent catalyseur est de la laccase.

Selon un mode de réalisation, le bloc de réacteur électrochimique constitue l'anode d'une biopile destinée à être immergée dans un milieu liquide contenant un sucre et de l'oxygène, et l'agent catalyseur est de la glucose oxydase.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
les figures 1A à 1C illustrent schématiquement des étapes d'un mode de réalisation d'un procédé de fabrication d'un film conducteur souple ;
la figure 2 illustre schématiquement la structure d'un film conducteur souple réalisé selon le procédé des figures 1A à 1C ;
la figure 3 représente à nouveau le film de la figure 1C ; et
la figure 4 représente un mode de réalisation d'un empilement de pastilles découpées dans un film.

### Description détaillée

De mêmes éléments ont été désignés par de mêmes références aux différentes figures et, de plus, les diverses figures ne sont pas tracées à l'échelle. Par souci de clarté, seuls les éléments qui sont utiles à la compréhension des modes de réalisation décrits ont été représentés et sont détaillés.

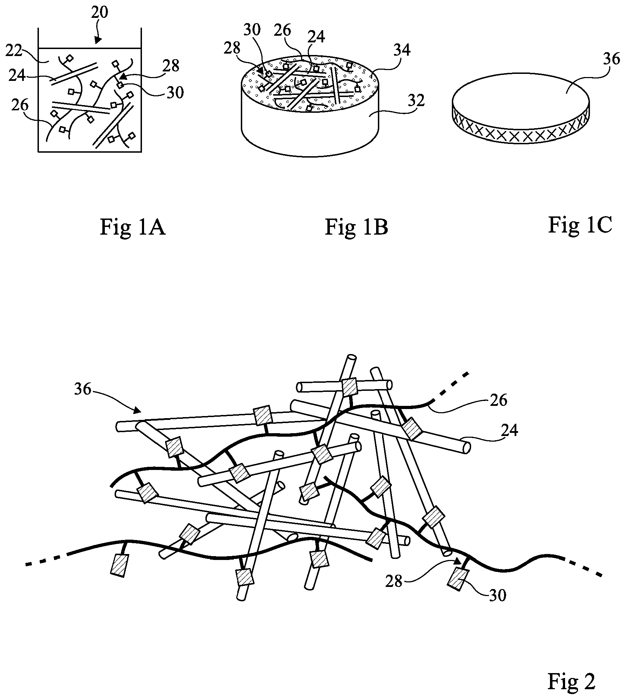

Les figures 1A à 1C illustrent schématiquement des étapes successives d'un mode de réalisation d'un film conducteur souple.

A l'étape représentée en figure 1A, on a préparé une suspension 20 comprenant, dans un solvant 22, des nanotubes de carbone 24 et des chaînes 26 d'un polymère linéaire. De préférence, le solvant 22 est hydrophobe. Le solvant peut être choisi dans le groupe comprenant le diméthylformamide (DMF), le tétrahydrofurane (THF), le N-méthyl-2-pyrrolidone (NMP), le diméthyl sulfoxide (DMSO), le dichlorométhane, le nitrobenzène et le chloroforme. Chaque chaîne 26 du polymère linéaire porte une succession de groupements fonctionnels 28 comportant des groupements pi conjugués 30. Les nanotubes de carbone 24 sont conducteurs en raison de la mobilité des électrons des groupements pi conjugués des nanotubes de carbone. Ainsi, un groupement pi conjugué 30 d'une chaîne 26 du polymère linéaire peut se lier par interaction pi-pi ("pi-stacking" en anglais) à un groupement pi conjugué d'un nanotube de carbone 24.

Les nanotubes de carbone 24 sont des nanotubes mono-feuillet ou multi-feuillets et peuvent avoir une longueur comprise entre 100 nm et 5 µm. Chaque groupement fonctionnel 28 comportant un groupement pi conjugué 30 est par exemple un macrocycle tel que les porphyrines et la phthalocyanine, ou un composé aromatique tel que du pyrène, du benzène, de l'indole, de l'azulène, des phénothiazines ou du naphtalène. Le polymère linéaire peut être choisi dans le groupe comprenant les polynorbornènes, le polyvinylpyrrolidone (PVP) et le polystyrène sulfonate de sodium (PSS). De préférence, la distance entre deux groupements pi conjugués 30 successifs d'une même chaîne 26 est inférieure à la longueur des nanotubes de carbone 24. Cette distance est par exemple comprise entre 5 et 50 nm pour des nanotubes d'une longueur de 200 à 500 nm. La longueur des chaînes 26 du polymère linéaire est choisie pour porter plusieurs groupements fonctionnels 28, par exemple au moins trois groupements fonctionnels 28, et de préférence au moins cinquante groupements fonctionnels 28. La longueur d'une chaîne peut être supérieure à 0,1 µm, de préférence supérieure à 10 µm. Le poids de l'ensemble des nanotubes de carbone 24 dans la suspension 20 est par exemple de 0,1 à 10 fois, de préférence 3 à 6 fois le poids de l'ensemble des chaînes 26 du polymère linéaire.

A l'étape illustrée en figure 1B, la suspension 20 est filtrée sous vide à travers une membrane 32, par exemple une membrane en PTFE (PolyTétraFluoroEthylène), comprenant des pores 34 dont le diamètre est par exemple compris entre 0,1 et 0,5 µm. Les chaînes 26 du polymère linéaire auxquelles sont liés des nanotubes de carbone 24 s'accumulent alors en un film à la surface de la membrane 32.

Comme cela est illustré en figure 1C, après que le film a été séparé de la membrane 32, on obtient un film 36 comprenant des nanotubes de carbone liés aux chaînes de polymère linéaire. A titre d'exemple, l'épaisseur du film 36 est comprise entre 0,01 et 1 mm. La concentration surfacique de nanotubes de carbone peut être de 3,4 mg/cm2 et celle des chaînes du polymère linéaire peut être de 0,56 mg/cm2.

La figure 2 est une représentation imagée des chaînes 26 de polymère linéaire liées à des nanotubes de carbone 24 dans le film 36. Les nanotubes de carbone 24 sont liés par interaction pi-pi avec des groupements pi conjugués 30 des groupements fonctionnels 28 portés par les chaînes 26 du polymère linéaire. Une chaîne 26 porte plusieurs nanotubes 24 et chaque nanotube peut être lié à plusieurs chaînes.

Les nanotubes de carbone 24 du film 36 sont en contact les uns avec les autres ce qui entraîne que le film 36 est électriquement conducteur. Du fait que les chaînes 26 du polymère linéaire peuvent se déformer sous l'effet de contraintes mécaniques, le film 36 obtenu est souple. En particulier, les inventeurs ont constaté qu'un tel film conducteur souple pouvait être enroulé sur lui-même sans se casser.

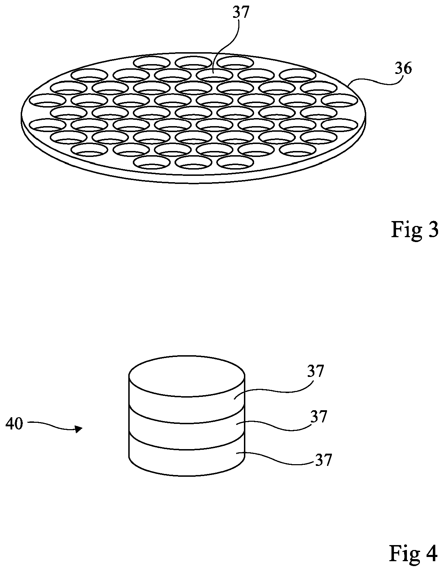

La figure 3 représente à nouveau le film conducteur souple obtenu par les étapes décrites précédemment en relation avec les figures 1A à 1C.

On propose ici de découper dans ce film, qui a par exemple un diamètre de l'ordre de 10 à 50 centimètres et une épaisseur de l'ordre de 100 à 300 µm, des pastilles 37. Ensuite, on réalise un bloc de réacteur 40 en empilant plusieurs de ces pastilles, par exemple trois dans l'exemple représenté, et en les soumettant à une pression, par exemple de l'ordre de 5 à 10 tonnes par centimètre carré. On obtient alors un bloc extrêmement rigide, à condition d'avoir réalisé la mise sous pression tandis que quelques gouttes d'eau sont insérées entre chaque pastille, et entre chaque pastille et les plaques d'appui de la presse. Alors, le bloc se détache facilement de la presse et ne s'arrache ni se délite. Cette solidité est attribuée à l'interaction entre les liaisons pi-pi du polymère d'une pastille et les nanotubes de carbone de la pastille adjacente.

Ce bloc est fonctionnalisé en insérant entre les pastilles lors de la mise sous pression une solution aqueuse contenant un agent catalyseur adapté.

Ainsi, l'agent catalyseur adapté est emprisonné (piégé) entre les pastilles et on obtient un bloc rigide peu susceptible de se déliter et dont l'agent catalyseur est immobilisé et non susceptible de s'échapper dans la solution dans laquelle le bloc est disposé en fonctionnement. La compression permet de faire la liaison entre les disques et par la même occasion, cette compression et les liaisons pi-pi entre disques qui en résultent permettent d'emprisonner les agents catalyseurs placés entre les disques. Il peut en outre s'établir une liaison covalente ou non-covalente entre ces agents catalyseurs et les disques ce qui améliore encore le piégeage des agents catalyseurs.

Les agents catalyseurs intercalés peuvent être des enzymes et/ou des médiateurs rédox, des catalyseurs métalliques ou macrocycliques ou des nanoparticules métalliques, des oxydes ou des complexes organométalliques. Tous ces composés catalysent une réaction et donc on a réalisé un réacteur et, s'il y a une réaction électrochimique, c'est un réacteur électrochimique.

Dans le cas où l'agent catalyseur est une enzyme, pour améliorer son piégeage, les chaînes du polymère linéaire peuvent porter des groupements fonctionnels aptes à se lier à une enzyme en plus des groupements fonctionnels comprenant des groupements pi conjugués. A titre d'exemple, dans le cas où l'enzyme est conjugué à une avidine, le groupement fonctionnel peut être une biotine. A titre d'autre exemple, le groupement fonctionnel peut être un N-hydroxysuccinimide qui réagit avec les groupements amino des enzymes, créant ainsi une liaison covalente entre le film et l'enzyme. Dans une variante de réalisation, on peut prévoir d'utiliser des molécules bifonctionnelles dont chacune porte d'une part un groupement fonctionnel comportant un groupement pi conjugué apte à se lier à un élément du film conducteur souple, et d'autre part un groupement fonctionnel apte à se lier à une enzyme.

De la même manière, si l'agent catalyseur à immobiliser par piégeage doit être associé pour son fonctionnement à un médiateur rédox, on peut spécialiser le film avec des groupements fonctionnels aptes à se lier à un médiateur d'oxydo-réduction. Dans ce cas, on prévoit que les chaînes du polymère linéaire portent des groupements fonctionnels aptes à se lier au médiateur d'oxydo-réduction. On pourra également prévoir que les groupements fonctionnels aptes à se lier au médiateur d'oxydo-réduction soient portés par des molécules bifonctionnelles, ayant d'une part un groupement fonctionnel permettant de se lier au médiateur rédox et d'autre part un groupement pi-conjugué permettant la liaison avec les nanotubes de carbone ou que le médiateur d'oxydoréduction soit fonctionnalisé par un groupement fonctionnel apte à se fixer directement sur les nanotubes de carbone. A titre d'exemple, dans le cas où le médiateur d'oxydo-réduction est le bleu de toluidine, ou chlorhydrate de triméthylthionine, on prévoit que le film comprend des groupements fonctionnels comportant des esters activés tel que le N-hydroxysuccinimide réagissant avec le motif amino du bleu de toluidine. Le médiateur d'oxydoréduction peut également être le viologène, dans ce cas on prévoit de fonctionnaliser le viologène par un groupement pi conjugué tel qu'un pyrène, le viologène sera alors fixé au film par interaction pi-pi entre un nanotube de carbone et le groupement pi conjugué du viologène fonctionnalisé.

Les exemples 1 à 4 ci-dessous sont des exemples de réacteurs électrochimiques comprenant des agents catalyseurs piégés entre des films de polymères linéaires et de nanotubes de carbone.

### Exemple 1

L'agent catalyseur piégé entre les pastilles est une enzyme telle qu'une laccase. Le système, une fois immergé dans une solution aqueuse, par exemple dans un corps humain ou animal, fonctionne comme une cathode et un potentiel positif apparaît sur un contact formé sur une pastille supérieure.

### Exemple 2

On réalise une biopile en utilisant un bloc d'anode et un bloc de cathode. L'agent catalyseur du bloc d'anode comprend par exemple de la glucose oxydase plus un médiateur redox et l'agent catalyseur du bloc de cathode comprend par exemple de la laccase. Cette biopile est de faible encombrement et est implantable in vivo.

### Exemple 3

Pour réaliser une pile, on peut aussi piéger au niveau d'un premier bloc de la porphyrine de rhodium et au niveau d'un deuxième bloc de la phthalocyanine de cobalt. La porphyrine de rhodium agit pour oxyder du glucose et la phthalocyanine de cobalt pour réduire l'oxygène. On notera que cette réaction ne fonctionne que quand les deux blocs sont immergés dans une solution à pH élevé, ce qui constitue une pile non implantable in vivo.

### Exemple 4

Le catalyseur inséré entre les pastilles est constitué de nanoparticules de platine. Quand le système est immergé en milieu acide dans un électrolyseur et qu'un courant est amené à circuler à travers le bloc entre un contact formé sur une pastille supérieure et une électrode immergée dans le bain de l'électrolyseur, le système fonctionne pour catalyser la réaction de production d'hydrogène.

De façon générale, quels que soient les éléments de catalyseur utilisés, on obtiendra un bon piégeage des éléments catalyseurs et donc une grande durée de vie du dispositif.

### VARIANTES

Des modes de réalisation particuliers ont été décrits. Diverses variantes et modifications apparaîtront à l'homme de l'art. En particulier, les blocs décrits ci-dessus peuvent être fonctionnalisés par d'autres composés, par d'autres enzymes, et par d'autres médiateurs d'oxydo-réduction que ceux indiqués à titre d'exemple dans la présente description.

Bien que l'on ait décrit des blocs comprenant une seule enzyme et éventuellement un seul médiateur d'oxydo-réduction, plus d'une enzyme et/ou plus d'un médiateur d'oxydo-réduction peuvent être liés à un même film conducteur.

Les blocs décrits ici peuvent être revêtus d'une membrane semi-perméable pour laisser passer les réactifs d'une réaction et ne pas laisser passer d'autres éléments plus lourds tels que des chaînes d'un polymère linéaire, des enzymes et des nanotubes de carbone. Dans le cas où ces blocs constituent un bioréacteur destiné à être implanté in-vivo, la membrane est en un matériau biocompatible, par exemple en chitosane, ou en le matériau désigné par la marque Dacron.

## Revendications

1. Procédé de fabrication d'un bloc de réacteur électrochimique comprenant les étapes suivantes :
réaliser un film conducteur souple (36) comprenant des chaînes d'un polymère linéaire à chacune desquelles sont liés par interaction pi-pi des nanotubes de carbone ;
découper des pastilles (37) dans ledit film ; et
empiler les pastilles et les soumettre à une pression de l'ordre de 5 à 10 tonnes par centimètre carré où quelques gouttes d'eau sont insérées entre chaque pastille, et entre chaque pastille et les plaques d'appui de la presse et en insérant entre les pastilles, lors de la mise sous pression, une solution aqueuse contenant un agent catalyseur adapté.

2. Procédé selon la revendication 1, dans lequel l'étape de réalisation d'un film conducteur souple comprend les étapes suivantes :
préparer une suspension (20) comprenant des nanotubes de carbone (24) et des chaînes d'un polymère linéaire (26), chacune desdites chaînes portant une succession de groupements fonctionnels (28) dont certains au moins comportent des groupements pi conjugués ; et
filtrer sous vide la suspension (20) pour obtenir un film (36) desdites chaînes (26) auxquelles sont liés les nanotubes de carbone (24) par interaction pi-pi.

3. Procédé selon la revendication 1, dans lequel l'agent catalyseur est choisi dans le groupe comprenant des enzymes, des catalyseurs métalliques, des catalyseurs macrocycliques et des médiateurs rédox.

4. Procédé selon l'une quelconque des revendications 1 à 3, dans lequel le polymère linéaire est choisi dans le groupe comprenant les polynorbornènes, le polyvinylpyrrolidone et le polystyrène sulfonate de sodium.

5. Procédé selon l'une quelconque des revendications 1 à 4, dans lequel chacun desdits groupements fonctionnels (28) comportant un groupement pi conjugué (30) est choisi dans le groupe comprenant les porphyrines, la phthalocyanine, le pyrène, le benzène, l'indole, l'azulène, les phénothiazines et le naphtalène.

6. Procédé selon l'une quelconque des revendications 1 à 5, dans lequel une distance inférieure à la longueur des nanotubes (24) sépare deux groupements pi conjugués (30) successifs d'une même chaîne de polymère linéaire (26).

7. Procédé selon l'une quelconque des revendications 1 à 6, dans lequel la longueur de chacune desdites chaînes de polymère (26) est supérieure à 0,1 µm.

8. Bloc de réacteur électrochimique comprenant au moins deux pastilles (37) découpées dans un film conducteur souple (36) comportant des chaînes d'un polymère linéaire à chacune desquelles sont liés par interaction pi-pi des nanotubes de carbone, un agent catalyseur choisi dans le groupe comprenant des enzymes, des catalyseurs métalliques, des catalyseurs macrocycliques et des médiateurs rédox étant piégé entre les pastilles.

9. Bloc de réacteur électrochimique selon la revendication 8, constituant la cathode d'une biopile destinée à être immergée dans un milieu liquide contenant un sucre et de l'oxygène, dans lequel ledit agent catalyseur est de la laccase.

10. Bloc de réacteur électrochimique selon la revendication 8, constituant l'anode d'une biopile destinée à être immergée dans un milieu liquide contenant un sucre et de l'oxygène, dans lequel ledit agent catalyseur est de la glucose oxydase.

## Patentansprüche

1. Verfahren zum Herstellen eines elektrochemischen Reaktorblocks, aufweisend die folgenden Schritte:
Bereitstellen einer flexiblen Leiterfolie (36), enthaltend lineare Polymerketten, mit jeder von denen Kohlenstoffnanoröhren durch n-n-Wechselwirkung verbunden sind;
Ausstanzen von Plättchen (37) aus der Folie; und
Stapeln der Plättchen und deren Beaufschlagen mit einem Druck in der Größenordnung von 5 bis 10 Tonnen pro Quadratzentimeter, wobei einige Tropfen Wasser zwischen jedem Plättchen und zwischen jedem Plättchen und den Auflageplatten der Presse eingebracht sind und indem, beim Beaufschlagen, zwischen den Plättchen eine wässrige Lösung, die einen geeigneten Katalyse-Wirkstoff enthält, eingebracht wird.

2. Verfahren nach Anspruch 1, bei dem der Schritt des Bereitstellens einer flexiblen Leiterfolie die folgenden Schritte aufweist:
Zubereiten einer Suspension (20), die Kohlenstoffnanoröhren (24) und lineare Polymerketten (26) enthält, wobei jede der Ketten eine Folge von Funktionsgruppen (28) trägt, von denen wenigstens bestimmte konjugierte n-Gruppen aufweisen; und
Vakuumfiltrieren der Suspension (20), um einen Film (36) aus den Ketten (26) zu erhalten, mit denen die Kohlenstoffnanoröhren (24) durch n-n-Wechselwirkung verbunden sind.

3. Verfahren nach Anspruch 1, bei dem der Katalyse-Wirkstoff ausgewählt ist aus der Gruppe aufweisend Enzyme, metallische Katalysatoren, makrozyklische Katalysatoren und Redoxmediatoren.

4. Verfahren nach einem der Ansprüche 1 bis 3, bei dem das lineare Polymer ausgewählt ist aus der Gruppe aufweisend Polynorbornene, Polyvinylpyrrolidon und Natriumpolystyrolsulfonat.

5. Verfahren nach einem der Ansprüche 1 bis 4, bei dem jede der Funktionsgruppen (28), die eine konjugierte π-Gruppe (30) aufweist, ausgewählt ist aus der Gruppe aufweisend Porphyrine, Phthalocyanin, Pyren, Benzol, Indol, Azulen, Phenothiazine und Naphtalen.

6. Verfahren nach einem der Ansprüche 1 bis 5, bei dem ein Abstand kleiner als die Länge der Nanoröhren (24) zwei aufeinanderfolgende, konjugierte n-Gruppen (30) einer gleichen linearen Polymerkette (26) trennt.

7. Verfahren nach einem der Ansprüche 1 bis 6, bei dem die Länge jeder der Polymerketten (26) größer ist als 0,1 µm.

8. Elektrochemischer Reaktorblock, aufweisend wenigstens zwei Plättchen (37), die aus einer flexiblen Leiterfolie (36) ausgestanzt sind, die lineare Polymerketten aufweist, an die jeweils Kohlenstoffnanoröhren durch n-n-Wechselwirkung gebunden sind, einen Katalyse-Wirkstoff, der ausgewählt ist aus der Gruppe aufweisend Enzyme, metallische Katalysatoren, makrozyklische Katalysatoren und Redoxmediatoren, der zwischen den Plättchen eingeschlossen ist.

9. Elektrochemischer Reaktorblock, nach Anspruch 8, der die Kathode einer Biobrennstoffzelle bildet, die für das Eintauchen in ein flüssiges Medium, das einen Zucker und Sauerstoff enthält, bestimmt ist, wobei der Katalyse-Wirkstoff Laccase ist.

10. Elektrochemischer Reaktorblock nach Anspruch 8, der die Anode einer Biobrennstoffzelle bildet, die für das Eintauchen in ein flüssiges Medium, das einen Zucker und Sauerstoff enthält, bestimmt ist, wobei der Katalyse-Wirkstoff Glucose-Oxidase ist.

## Claims

1. A method for manufacturing an electrochemical block comprising the following steps:
forming a flexible conductive film (36) comprising chains of a linear polymer, each of which having carbon nanotubes bonded thereto by pi stacking;
cutting pellets (37) from said film; and
stacking the pellets and submitting them to a pressure in the order of from 5 to 10 tons per square centimeter pressure, wherein few drops of water are inserted between each pellet, and between each pellet and the bearing plates of the press and inserting between pellets, during the pressure, an aqueous solution containing an appropriated catalyst.

2. The method according to claim 1, wherein the step of forming a flexible conductive film comprises the following steps:
preparing a suspension (20) comprising carbon nanotubes (24) and chains of a linear polymer (26), each of said chains carrying a succession of functional groups (28), at least some of which comprise pi-conjugated groups; and
vacuum filtering the suspension (20) to obtain a film (36) of said chains (26) having the carbon nanotubes (24) bonded thereto by pi stacking.

3. The method according to claim 1, wherein the catalyst is selected from the group comprising enzymes, metal catalysts, macrocyclic catalysts, and redox mediators.

4. The method according to any of claims 1 to 3, wherein the linear polymer is selected from the group comprising poly-norbornenes, polyvinylpyrrolidone, and sodium polystyrene sulfonate.

5. The method according any of claims 1 to 4, wherein each of said functional groups (28) comprising a pi-conjugated group (30) is selected from the group comprising porphyrins, phthalo-cyanine, pyrene, benzene, indole, azulene, phenothiazines, and naphthalene.

6. The method according to any of claims 1 to 5, wherein a distance shorter than the length of the nanotubes (24) separates two successive pi-conjugated groups (30) of a same linear polymer chain (26).

7. The method according to any of claims 1 to 6, wherein the length of each of said polymer chains (26) is greater than 0.1 µm.

8. An electrochemical reactor block comprising at least two pellets (37) cut from a flexible conductive film (36) comprising chains of a linear polymer, each of which has carbon nanotubes bonded thereto by pi stacking, a catalyst selected from the group comprising enzymes, metal catalysts, macrocyclic catalysts, and redox mediators being trapped between the pellets.

9. The electrochemical reactor block according to claim 8, forming the cathode of a biofuel cell intended to be immersed in a liquid medium containing a sugar and oxygen, wherein said catalyst is laccase.

10. The electrochemical reactor block according to claim 8, forming the anode of a biofuel cell intended to be immersed in a liquid medium containing a sugar and oxygen, wherein said catalyst is glucose oxidase.
